# EUROPEAN PATENT APPLICATION

(11) **EP 3 232 154 A1**
(43) Date of publication of application: **18.10.2017**
(21) Application number: 16165583.2
(22) Date of filing: 15.04.2016
(51) Int. Cl.: G01B 21/16, F01D 21/00, F01D 25/28, G01B 5/02, G01B 5/20

(54) **MEASUREMENT DEVICE FOR A ROTOR BLADE OF A WIND TURBINE**

(71) Applicant: Siemens Aktiengesellschaft, 80333 München (DE)
(72) Inventor: Pedersen, David Stien, 9000 Aalborg (DK)

(57) **Abstract**

The invention relates to a measurement device (20) for a rotor blade (1) of a wind turbine The measurement device (20) comprises a main arm (21), a trailing edge arm (22), and a leading edge arm (23). The trailing edge arm (22) is connected with the main arm (21) at a pre-determined first angle (221), the leading edge arm (23) is connected with the main arm (21) at a pre-determined second angle (231), and at least one of the leading edge arm (23) and the trailing edge arm (22) is slidably connected with the main arm (21) along the longitudinal axis (211) of the main arm (21). Furthermore, the trailing edge arm (22) comprises a receiving unit (223) for receiving a trailing edge (12) of a rotor blade (1) of a wind turbine, and the leading edge arm (23) is arranged and prepared to be brought in contact with a leading edge (11) of the airfoil (10).

## Description

The present invention relates to a measurement device for a rotor blade of a wind turbine.

There exist several situations during or after manufacturing of a rotor blade in which a position on a profile of the rotor blade needs to be determined. Examples of typical positions of interest on the profile of a rotor blade include the trailing edge, the leading edge and the (chordwise) position of maximum thickness of the profile.

The trailing edge of a rotor blade of a wind turbine is usually relatively easy to identify, as the trailing edge is typically designed as a sharp edge with a limited thickness of only a few millimeter. This is considerably less than the thickness of the remaining portions of the rotor blade.

The leading edge of a rotor blade of a wind turbine is typically characterized by a round shape, featuring a curvature which continuously merges into the given curvatures of the suction and pressure side, respectively. The identification of the leading edge is typically not straightforward.

It is common practice to determine the leading edge on a rotor blade purely by visual judgment. Unsurprisingly, the identified positions of the leading edge vary considerably, depending on the person carrying out the determination and the ambient conditions. Typical variations in the determination of the leading edge by visual judgment are at least in the range of one centimeter.
Likewise, the position of the maximum thickness of the rotor blade in a specific region is also difficult to determine accurately, based on visual inspection.

Another approach of determining the position of the leading edge of a portion of a rotor blade is the use of "templates". These templates comprise a marker at the leading edge and imitate the expected profile of, for instance, the first 10 - 20% of the chord length of the rotor blade as measured from the leading edge on both the pressure and the suction side. By fitting the template to the rotor blade, the leading edge can be marked at the rotor blade according to the marker on the template.

A drawback of this method to determine the leading edge of a rotor blade is that many individual templates are needed, due to the changing geometry of the rotor blade along the span. Another drawback is that a high manufacturing precision is needed in order to ensure that the template and the corresponding portion of the rotor blade fit together well.

It is thus an objective of the present invention to provide a way to determine certain positions on the profile of a rotor blade in an accurate and cost-efficient manner.

This objective is obtained by the subject matter of claim 1 of the present invention. Advantageous embodiments and modifications are disclosed in the dependent claims.

According to the invention, there is provided a measurement device for a rotor blade of a wind turbine, the measurement device comprising a main arm, a trailing edge arm, and a leading edge arm. The trailing edge arm is connected with the main arm at a pre-determined first angle, and the leading edge arm is connected with the main arm at a pre-determined second angle. At least one of the leading edge arm and the trailing edge arm is slidably connected with the main arm along the longitudinal axis of the main arm. The trailing edge arm comprises a receiving unit for receiving a trailing edge of a rotor blade of a wind turbine. The leading edge arm is arranged and prepared to be brought in contact with a leading edge of the airfoil.

The described measurement device therefore represents a specifically designed device for the determination of specific positions on a rotor blade of a wind turbine. The invention makes use of the fact that typical airfoils of rotor blades of wind turbines feature a well-defined trailing edge. By providing a suitable receiving unit at the trailing edge arm, the measurement device is arranged and prepared to be fixed, i.e. located at the trailing edge of the portion of the rotor blade to be investigated. In other words, the trailing edge of the rotor blade is inserted, i.e. put into the corresponding receiving unit.

It is advantageous if the shape of the receiving unit and the shape of the trailing edge correspond to each other well. However, for a good applicability of the measurement device, it is not necessary that the receiving unit and the trailing edge match perfectly. The measurement device, in particular its receiving unit, is beneficially designed such that it can be applied to most of trailing edge shapes and sizes.

An important aspect of the invention is that the first and second angle, characterizing the connection between the trailing edge arm and the main arm, and the leading edge arm and the main arm, respectively, need to be "pre-determined". This shall be understood as the first and second angle need to be kept constant during a measurement procedure on a rotor blade.

The exact value of the first and second angle is not relevant. However, preferred values for the first and second angle are substantially ninety degree each, as this leads to a simple and intuitive design of the measurement device. However, different angles, such as e.g. seventy-five degree for one or both angles each, are possible as well.

Note that the first angle (and the given values above) is understood as the angle between the longitudinal axis of the trailing edge arm and the longitudinal axis of the main arm. In the case that the trailing edge arm has, for instance, a kink, or a bent, or a curved portion or yet another design element at the joint with the main arm, the first angle still refers to the overall longitudinal of the trailing edge arm and not to the specific portion of the trailing edge arm near the joint.

The same applies mutatis mutandis for the second angle, i.e. the angle between the leading edge arm and the main arm.

In a first embodiment of the invention, the leading edge arm is connected unmovably with the main arm with regard to any displacements along the longitudinal axis of the main arm. This implies that any sliding movements along the length axis of the main arm is prevented. Any pivoting movements about the joint between the leading edge arm and the main arm could be allowed - in order to selectively set the first angle in a pre-defined range. This could be used in order to take varying design angles of attack of the airfoil into account. As an example, the leading edge arm could be arranged, i.e. orientated deliberately with an inclination by two degree. Then, when the leading edge arm is brought in contact with the surface of the rotor blade, the point (or line) being shifted two degree away from the leading edge would be determined.

Alternatively, not only any sliding, i.e. translational movements, but also any pivotal movements may be prevented at the joint between the leading edge arm and the main arm. This alternative would lead to a completely rigid and stiff connection between the leading edge arm and the main arm.

In any case, in this embodiment - as long as any sliding movements between the leading edge arm and the main arm are prevented - there need to be a possibility to shift, i.e. slide, the trailing edge arm relative to the main arm. This is necessary in order to adjust the spacing between the leading edge arm and the trailing edge arm to the actual chord length of the profile of the rotor blade to be investigated.

Note that, in principle, for a determination of the leading edge, parallel longitudinal axes of the trailing edge arm and the leading edge arm are important.

In a second embodiment, the trailing edge arm is connected unmovably with regard to any sliding movements of the trailing edge arm relative to the main arm, while the leading edge arm is allowed to be slid along the longitudinal axis of the main arm.

Finally, in a third embodiment, both the leading edge arm and the trailing edge are slidably connected with the main arm along its longitudinal axis. This set-up has the advantage of maximum flexibility when measuring the chord length of the investigated profile and determining the position of the leading edge. Preferably, the leading edge arm can be slid relative to the main arm independently from the position of the trailing edge arm relative to the main arm.

In all mentioned embodiments, the sliding connection between the main arm and the trailing edge arm or between the main arm and the leading edge arm or both sliding connections comprise a set of wheels. However, any other technical realization which ensures and realizes a sliding movements are suitable, too.

Note that the measurement device is arranged and prepared such that both the trailing edge and the leading edge of the rotor blade are "brought in contact" with the rotor blade during investigation of the rotor blade. The trailing edge is in contact with the measurement device via its receiving unit at the trailing edge arm. The leading edge of the rotor blade is in contact with the measurement device via the leading edge arm.

For instance, the leading edge arm may initially be placed in a position where its distance from the trailing edge arm is larger than the chord length of the profile being investigated. After inserting the trailing edge of the profile, i.e. of the portion of the rotor blade which encompasses the profile, into the receiving unit of the trailing edge arm, the leading edge arm is subsequently slid from its initial position towards the trailing edge arm. This sliding movement is continued until the leading edge arm is in contact with the profile. Then, the point or area where the leading edge arm is actually in contact with the rotor blade can be associated with the leading edge of this portion of the rotor blade.

Note that the inventive measurement device allows a determination of a specific position on a portion of a rotor blade with significantly increased accuracy, compared to conventional techniques of relying on visual judgment. For instance, while the known method relying on visual judgment might not be able to prevent variations of at least one centimeter, using the concept as described in this patent application, variations can be kept down to a few millimeter, e.g. two or even only one millimeter.

By providing a scale at the main arm of the measurement device, the determination of the concrete chord length in absolute values is facilitated. The scale can be linear or nonlinear. Alternatively or additionally, another scale can be provided at one of the leading edge arm or trailing edge arm, or both. Another scale could also be provided for indicating the angle between the leading edge arm and the main arm. This would have the advantage to monitor easier the pre-determined angle set at another angle than ninety degree.

The determined contact area between the leading edge arm and the rotor blade may be marked by a writing device, such as a pencil.

The writing device may be integrated into the leading edge arm, for instance along the longitudinal axis of the leading edge arm at the lateral side being arranged and prepared to face the rotor blade to be investigated.

Alternatively, the leading edge arm may comprise a leading edge slit, i.e. a gap. By aligning the measurement device, in particular the leading edge arm, such with regard to the rotor blade that the borders of the leading edge slit are in contact with the rotor blade, a marker can be picked or drawn on the surface of the rotor blade through the leading edge slit.

Yet another way of marking the position on the surface of the rotor blade is the use of a needle, followed by a pencil or sticking marker.

Note that in general it might be preferred to avoid any contact of any metal material with the surface of the rotor blade. This could then be considered when choosing the design and material choice of the receiving unit and the contact area of the leading edge arm.

The measurement device is particularly suited to determine the leading edge of a rotor blade in a simple and accurate manner. Other applications are possible as well. For instance, a specific chordwise position, such as e.g. "twenty per cent of the chord length as measured from the leading edge of the rotor blade", can be determined as well. This is useful, for instance, when the position of application of vortex generators needs to be determined or monitored.

Likewise, potential erosion zones, e.g. due to leading edge erosion, can be determined by the proposed measurement device. This is particularly useful for precisely determining the position of the attachment of a leading edge protection shell or a leading edge protection film to the surface of a portion of the rotor blade.

In yet another embodiment of the invention, the measurement device further comprises a third arm, which is slidably connected with the main arm perpendicular to the longitudinal axis of the main arm. In other words, in this embodiment, there is provided a further arm, which, unlike the leading edge arm or the trailing edge arm, is movable in a direction which is perpendicular to the longitudinal axis of the main arm. This has the technical effect that the thickness of the profile, which is defined as the distance between the suction side and the pressure side, can be investigated. Although quantitative values regarding the thickness might not be obtainable with a simple configuration of the measurement device, the information at which chordwise position the profile is thickest could be obtained.

Preferably, the third arm is furthermore connected slidably with the main arm along the longitudinal axis of the main arm.

Note that the third arm is only an option, i.e. a specific variant, of the invention.

A measurement device with a detachable third arm is also an option in order to avoid the provision of the third arm under normal use of the measurement device, but having the possibility to add the third arm to the system, if needed in a certain situation.

In another embodiment of the invention, the measurement device comprises a scissor arrangement for the third arm. This would allow the determination of a pre-determined relative chordwise position on the rotor blade. For example, the scissor arrangement could be configured such, that the third arm always marks a chordwise position on the profile of the rotor blade which is twenty-five percent of the chord length as measured from the leading edge.

In yet another embodiment of the invention, the leading edge arm comprises a capture arrangement for increased ease and precision in the determination of a specific position on the rotor blade. In other words, the leading edge - in order to give an example of a position which needs to be determined by the present measurement device - is "captured" more easily by means of the capture arrangement, compared to a plane, "flat" contact area at the leading edge arm.

Embodiments of the invention are now described, by way of example only, by the accompanying drawings, of which:
- Figure 1: shows a cross-sectional view of a first embodiment of a measurement device according to the invention and an airfoil of a rotor blade being investigated by means of the measurement device;
- Figure 2: shows a perspective view onto the leading edge of a portion of a rotor blade and onto a part of a second embodiment of a measurement device according to the invention; and
- Figure 3: shows a cross-sectional view of a third embodiment of a measurement device according to the invention and an airfoil of a rotor blade being investigated by means of the measurement device.

The illustration in the drawings is schematic. Note that similar reference signs refer to similar or identical parts of the invention in different drawings.

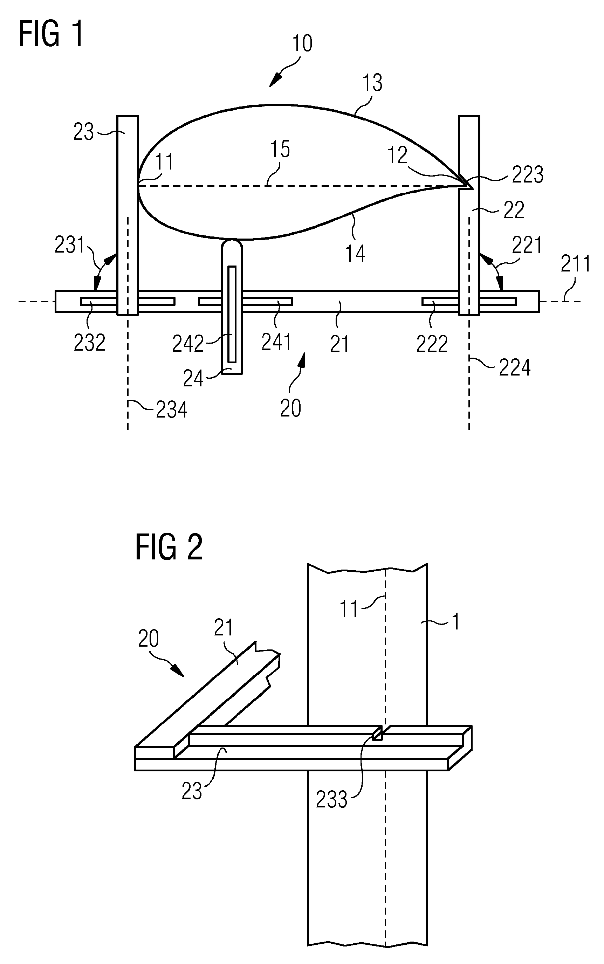

Figure 1 shows a cross-sectional view of a rotor blade. Such a view is also referred to a "profile", or "airfoil" of the rotor blade at a chosen spanwise position of the rotor blade.

The airfoil 10 comprises a suction side 13 and a pressure side 14. The airfoil 10 furthermore features a trailing edge 12 and a leading edge 11. The leading edge 11 is connected with the trailing edge 12 via a straight (virtual) line, which is referred to as the chord line 15 of the airfoil 10.

While the trailing edge 12 is relatively sharp, i.e. thin, at its outer end, the leading edge 11 is round, i.e. curved. A curvature radius can be assigned to the leading edge 11.

From Figure 1 it is plausible that a determination of the trailing edge of an airfoil (or rotor blade) is relatively unambiguous and straightforward, while the precise location of the leading edge seems to be difficult, if solely based on visual inspection.

It is noted that in general, and not being restricted to the specific embodiment as illustrated in Figure 1, the position of the leading edge of an airfoil is defined as being the point on the perimeter of the airfoil which is furthest away from the trailing edge. It can be imagined that this relatively theoretical and abstract definition is difficult to apply in practice, when having there an actual three dimensional rotor blade. Use of a measurement device as disclosed in this patent application is highly beneficial for this purpose.

Figure 1 also discloses a first embodiment of a measurement device 20. The measurement device 20 comprises a main arm 21, a trailing edge arm 22, and a leading edge arm 23. All arms 21, 22, 23 are configured as elongated objects, such that a longitudinal axis 211, 224, 234 can be defined for each arm 21, 22, 23, respectively. The angle between the longitudinal axis 211 of the main arm 21 and the longitudinal axis 224 of the trailing edge arm 22 is referred to as the first angle 221. In the exemplary embodiment illustrated in Figure 1, the first angle 221 is approximately ninety degree.

Likewise, the angle between the longitudinal axis 211 of the main arm 21 and the longitudinal axis 234 of the leading edge arm 23 is referred to as the second angle 231. In the exemplary embodiment illustrated in Figure 1, the second angle 231 is approximately ninety degree, too.

Both arms, the trailing edge arm 22 and the leading edge arm 23, are slidably connected to the main arm 21. The sliding connection for the trailing edge arm 22 is supported by means of a first slit 222 in the main arm 21; the sliding connection for the leading edge arm 23 is supported by means of a second slit 232 in the main arm 21.

The trailing edge arm 22 comprises a receiving unit 223, which is arranged and prepared for receiving a trailing edge of a rotor blade. The receiving unit 223 is configured as a notch, i.e. as an indentation in the exemplary embodiment of Figure 1. However, other suitable shapes and designs are possible, too. It is, for instance, also possible to add a receiving unit to an existing beam-shaped trailing edge arm instead of machining the receiving unit into it.

In Figure 1, the receiving unit 223 is located in the upper part of the trailing edge arm 22, wherein "upper" refers to that end of the trailing edge arm 22, which is opposite to the joint of the trailing edge arm 22 with the main arm 21.

Note that, in principle, the trailing edge arm 22 may be designed slidably with regard to the main arm 21, such that the "height" of the receiving unit 223 with regard to the main arm 21 can be adjusted to the airfoil to be investigated. Alternatively, the height of the receiving unit 223 with regard to the main arm 21 may also be kept constant and, consequently, the distance between the pressure side 14 (or suction side 13) and the main arm 21 varies depending on the shape and the size of the airfoil to be investigated.

The leading edge arm 23 may comprise an arrangement for marking the leading edge 11 of the a rotor blade (or airfoil 10). Such an arrangement may be configured as a writing device or as a leading edge slit. In Figure 1, the arrangement for marking the leading edge 11 of the airfoil 10 is not visible.

Furthermore, Figure 1 discloses a third arm 24 of the measurement device 20. By help of the third arm 24, the chordwise position of the largest extension of the pressure side 14, as measured away from the chord line 15, can be determined. This can be achieved by (a) fitting the receiving unit 223 to the trailing edge 12 of the airfoil 10, (b) positioning the leading edge arm 23 of the measurement device 20 such that the leading edge arm 23 is in contact with the airfoil 15, and (c) choosing the position of the third arm 24 such that the distance between the tip of the third arm 24 being in contact with the pressure side 14 of the airfoil 10 and the main arm 21 is minimum (the tip of the third arm being defined as that end of the elongated third arm 24, which is located at the same side of the main arm 21 as the airfoil 10).

The third arm 24 is slidable both along the longitudinal axis 211 of the main arm 21 and perpendicular to it. These slidable movements are supported by the third slit 241 and the fourth slit 242, respectively.

Figure 2 shows a perspective view onto the leading edge 11 of a portion of a rotor blade 1 and onto a part of a second embodiment of a measurement device 20 according to the invention. The measurement device 20 comprises a main arm 21, a trailing edge arm 22 (not shown in Figure 2), and a leading edge arm 23. The leading edge arm 23 comprises a leading edge slit 233 for supporting marking the leading edge 11 of the rotor blade 1.

The leading edge arm 23 is brought in contact with the surface of the rotor blade 1. The measurement device 20 is moved such back and forth (i.e. along the longitudinal axis of the leading edge arm) until the leading edge slit 233, i.e. its surrounding frame, is in contact the surface of the rotor blade 1. Then, the leading edge 11 of the rotor blade 1 may be marked, e.g. by a pencil or other writing utensil.

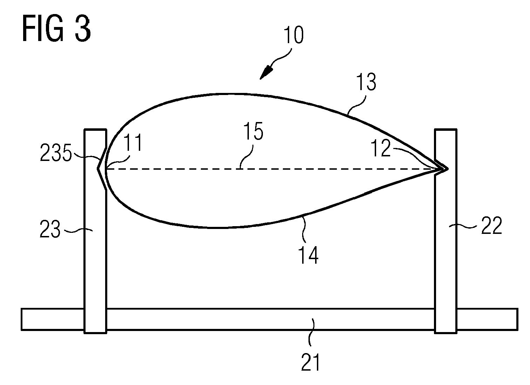

Figure 3 shows a cross-sectional view of a third embodiment of a measurement device 10 according to the invention and an airfoil 10 of a rotor blade being investigated by means of the measurement device 10. The third embodiment differs from the first embodiment in that the leading edge arm 23 comprises a capture arrangement 235 at its upper end. The capture arrangement 235 is configured as a notch comprising two side walls. The capture arrangement 235 facilitates the determination of the leading edge 11 or any other position on the rotor blade.

## Claims

1. Measurement device (20) for a rotor blade (1) of a wind turbine, the measurement device (20) comprising a main arm (21), a trailing edge arm (22), and a leading edge arm (23), wherein
- the trailing edge arm (22) is connected with the main arm (21) at a pre-determined first angle (221),
- the leading edge arm (23) is connected with the main arm (21) at a pre-determined second angle (231),
- at least one of the leading edge arm (23) and the trailing edge arm (22) is slidably connected with the main arm (21) along the longitudinal axis (211) of the main arm (21),
- the trailing edge arm (22) comprises a receiving unit (223) for receiving a trailing edge (12) of a rotor blade (1) of a wind turbine, and
- the leading edge arm (23) is arranged and prepared to be brought in contact with a leading edge (11) of the airfoil (10).

2. Measurement device (10) according to claim 1,
wherein both the leading edge arm (23) and the trailing edge arm (22) are slidably connected with the main arm (21), respectively.

3. Measurement device (10) according to one of the preceding claims,
wherein the leading edge arm (23) can be slid relative to the main arm (21) independently from the position of the trailing edge arm (22) relative to the main arm (21).

4. Measurement device (10) according to one of the preceding claims,
wherein the measurement device (10) comprises a third arm (24), which is slidably connected with the main arm (21) perpendicular to the longitudinal axis (211) of the main arm (21).

5. Measurement device (10) according to claim 4,
wherein the third arm (24) is furthermore connected slidably with the main arm (21) along the longitudinal axis (211) of the main arm (21).

6. Measurement device (10) according to one of the preceding claims,
wherein the sliding connection between the main arm (21) and the trailing edge arm (22) and/or the leading edge arm (23) comprises a set of wheels.

7. Measurement device (10) according to one of the preceding claims,
wherein the first angle (221) is substantially ninety degree and/or the second angle (231) is substantially ninety degree.

8. Measurement device (10) according to one of the preceding claims,
wherein the leading edge arm (23) comprises a leading edge slit (233) for marking a leading edge (11) of the rotor blade (1).

9. Measurement device (10) according to one of the claims 1 to 7,
wherein the leading edge arm (23) comprises a writing device for marking a leading edge (11) of the rotor blade (1).

10. Measurement device (10) according to one of the preceding claims,
wherein the main arm (21) comprises a scale for reading the distance between a spacing between the leading edge arm (23) and the trailing edge arm (22).

11. Measurement device (10) according to one of the preceding claims,
wherein the leading edge arm (21) comprises an arrangement for selectively setting the second angle (231).

12. Measurement device (12) according to one of the preceding claims,
wherein the leading edge arm (23) comprises a capture arrangement (235) for increased ease and precision in the determination of a specific position on the rotor blade (1).
